# EUROPÄISCHE PATENTSCHRIFT

(11) **EP 1 784 791 B1**
(45) Veröffentlichungstag und Bekanntmachung des Hinweises auf die Patenterteilung: **23.11.2016**
(21) Anmeldenummer: 05783767.6
(22) Anmeldetag: 02.09.2005
(51) Int. Cl.: G07B 15/00, G06Q 30/06, G06Q 20/40

(54) **ELEKTRONISCHES TICKET**
ELECTRONIC TICKET
BILLET ELECTRONIQUE

(30) Priorität: 03.09.2004 DE 202004013762 U; 21.10.2004 DE 202004016344 U
(43) Veröffentlichungstag der Anmeldung: 16.05.2007
(73) Patentinhaber: Modulatec GmbH, 64367 Mühltal (DE)
(72) Erfinder: CHAPPUIS, Pierre,, CH-3073 Gümligen (CH)
(74) Vertreter: WSL Patentanwälte Partnerschaft mbB
(86) Internationale Anmeldenummer: PCT/EP2005/009460
(87) Internationale Veröffentlichungsnummer: WO 2006/027171

(56) Entgegenhaltungen:
- EP-A- 1 367 542
- WO-A-00/62260
- WO-A2-03/005145
- DE-A1- 19 718 103
- GB-A- 2 361 570
- GB-A- 2 390 211

## Beschreibung

Die vorliegende Erfindung bezieht sich auf ein Abwicklungssystem zur Bereitstellung und Kontrolle eines elektronischen Tickets für einen Benutzer entsprechend dem Oberbegriff des unabhängigen Anspruchs 1.

Entsprechende Abwicklungssysteme sind aus der GB 2 390 211 A bekannt.

Im Folgenden wird zunächst erläutert, was unter einigen, im Rahmen der vorliegenden Schrift wichtigen Begriffen verstanden wird, bevor spezieller auf den Stand der Technik eingegangen wird.

Unter einem "Ticket" wird ein Nachweis verstanden, der einen Benutzer (oder auch mehrere Benutzer) zur Inanspruchnahme einer Dienstleistung eines Verkehrs- oder Beförderungsunternehmens berechtigt oder der eine Zugangsberechtigung für den Benutzer im Sinne einer Eintrittskarte bzw. eine "körperliche" Zugangsberechtigung für den Benutzer darstellt. Bei dem Ticket kann es sich also beispielsweise um eine Fahrkarte, einen Flugschein, ein Bus-oder U-Bahn-Ticket, um eine Konzertkarte, ein Parkhaus-Ticket, eine Kinokarte oder um irgendein anderes vergleichbares Ticket handeln.

Seit einiger Zeit hat sich der Begriff "elektronisches Ticket" (auch "e-Ticket", "electronic ticket" oder ähnlich) etabliert, wobei darunter häufig die spezielle Ausprägung als elektronisches Flug-Ticket verstanden wird. Zur Handhabung eines derartigen elektronischen Flug-Tickets wird dieses auf einem elektronischen Speichermedium, beispielsweise innerhalb des Computer-Netzwerks einer Fluggesellschaft, abgelegt. Bei einer Kontrolle, also beispielsweise beim Einchecken des Benutzers am Flughafen, stehen dann dem Kontrollpersonal über das Computer-Netzwerk die Informationen über das elektronische Ticket online vor Ort zur Verfügung.

Im Rahmen der vorliegenden Schrift wird unter dem Begriff "elektronisches Ticket" ein Ticket verstanden, das in elektronischer Form vorliegt, also auf einem elektronischen Speichermedium abgespeichert ist, und daher als solches prinzipiell nicht notwendigerweise in materieller oder "körperlicher" Form, beispielsweise also in Papierform, realisiert sein muss. Dieser Vorteil wird oft kurz mit dem Ausdruck "papierlos" bezeichnet und im Folgenden ist diese Bezeichnung der Einfachheit halber übernommen. Um ein elektronisches Ticket von einem Ticket in materieller oder körperlicher Form, also in herkömmlicher Form zu unterscheiden, kann also im zweiten Fall kurz von einem "Ticket in materieller Form" gesprochen werden.

Das elektronische Ticket enthält üblicherweise eine Information über den Benutzer des Tickets, also beispielsweise den Namen des Benutzers. Außerdem enthält das elektronische Ticket eine Information, die angibt, wozu das elektronische Ticket den Benutzer berechtigt; diese Information kann also beispielsweise in Form der Angabe einer speziellen Flugverbindung vorliegen.
Bei der Handhabung eines elektronischen Tickets können im Allgemeinen zwei Teile unterschieden werden: Erstens erfolgt eine Bereitstellung des elektronischen Tickets und zweitens muss sinnvollerweise bei der Inanspruchnahme des Tickets durch den Benutzer eine Kontrolle des elektronischen Tickets bzw. des Benutzers desselben möglich sein. Im Folgenden wird näher erläutert, was mit diesen beiden Begriffen im Rahmen der vorliegenden Schrift im Einzelnen bezeichnet werden soll.

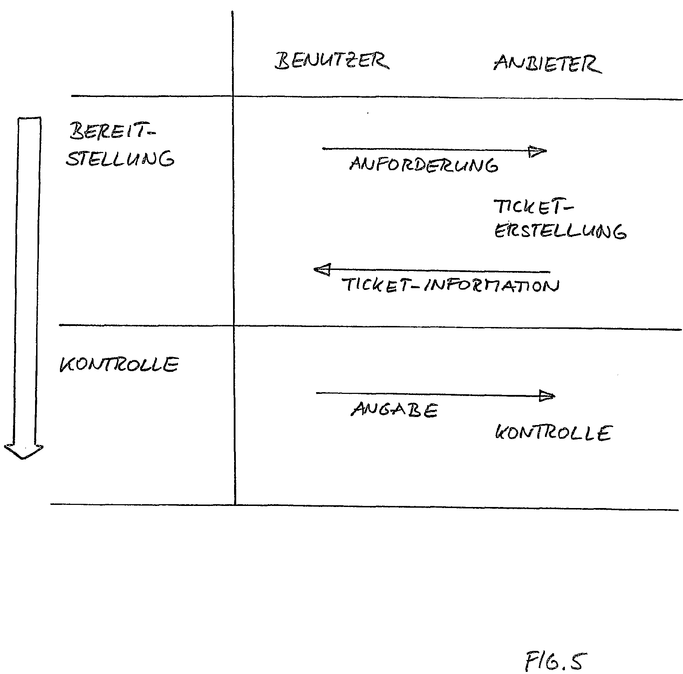

In Fig. 5 sind die beiden Teile "Bereitstellung" und "Kontrolle" schematisch dargestellt. Der dicke Pfeil in Fig. 5 symbolisiert dabei die Richtung des zeitlichen Ablaufs. Die Bereitstellung des elektronischen Tickets erfolgt dabei also selbstverständlich vor der Kontrolle desselben.

An der Bereitstellung und Kontrolle sind im Allgemeinen zwei Parteien beteiligt, und zwar zum einen der Benutzer des elektronischen Tickets und zum anderen die Partei, die das elektronische Ticket ausstellt oder ausgibt, also beispielsweise eine Verkehrsbeförderungs-Gesellschaft. Diese "Ticket-ausstellende Partei" wird im Folgenden kurz als "Anbieter" bezeichnet.

Die Bereitstellung beginnt in der Regel damit, dass der Benutzer das gewünschte elektronische Ticket beim Anbieter anfordert und in der Regel käuflich erwirbt. Der Anbieter erstellt oder erzeugt dann das elektronische Ticket für den Benutzer. Weiterhin ist in der Regel vorgesehen, dass der Benutzer nach erfolgter Erzeugung oder Herstellung des elektronischen Tickets die Möglichkeit hat, sich Gewißheit darüber zu verschaffen, ob das elektronische Ticket für ihn tatsächlich, und zwar so wie vorgesehen, ausgestellt ist. Hierzu ist in der Regel vorgesehen, dass eine entsprechende "Ticket-Information" an den Benutzer übermittelt wird. Diese Übermittlung der Ticket-Information kann dabei auf Veranlassung des Anbieters oder auf Veranlassung des Benutzers erfolgen (im push- oder pull-Modus für den Benutzer). Im Fall eines Flug-Tickets kann also beispielsweise vorgesehen sein, dass der Anbieter, in diesem Fall also die Fluggesellschaft, dem Benutzer beispielsweise per E-Mail die Ticket-Information zukommen lässt, oder aber es kann vorgesehen sein, dass der Benutzer von sich aus auf einen elektronischen Speicher des Anbieters, beispielsweise über das Internet, zugreifen kann, in dem er dann die entsprechende Information findet. Selbstverständlich ist dabei auch eine Kombination der beiden genannten Arten möglich.

Die Erzeugung des elektronischen Tickets ist das Kernelement bei der Bereitstellung und in jedem Fall erforderlich. Im Gegensatz dazu sind die Anforderung und die Übermittlung der Ticket-Information an den Benutzer optionale Elemente der Bereitstellung. Die Handhabung funktioniert also im Allgemeinen auch dann, wenn das Ticket beispielsweise ohne Initiative des Benutzers vom Anbieter für den Benutzer ausgestellt wird. Die Übermittlung der Ticket-Information ist ebenfalls nicht zwingend erforderlich, weil die Handhabung auch dann funktioniert, wenn der Benutzer einfach darauf vertraut, dass das elektronische Ticket so wie vorgesehen ausgestellt worden ist, also auf die Übermittlung der Ticket-Information verzichtet.

Nach der Bereitstellung des elektronischen Tickets ist die Möglichkeit einer Kontrolle vorgesehen. Beispielsweise kann im Fall eines Flug-Tickets diese Kontrolle erfolgen, wenn der Benutzer am Flughafen eincheckt. Allgemein formuliert ist zur Kontrolle vorgesehen, dass der Benutzer gegenüber der Seite des Anbieters eine Angabe macht, die ihn als Besitzer des (gültigen) elektronischen Tickets ausweist.

Ein wesentlicher Vorteil eines elektronischen Tickets gegenüber einem Ticket in materieller Form ist darin zu sehen, dass ein Benutzer das elektronische Ticket nicht im herkömmlichen Sinne verlieren, "liegen lassen" oder vergessen kann; das elektronische Ticket wird auch nicht mit der Post befördert, so dass auch ein Verlust auf diesem Weg ausgeschlossen ist. Außerdem erfordert das Ticket in materieller Form einen entsprechenden Materialeinsatz, der bei der elektronischen Form nicht notwendig ist.

Allerdings stehen diesen Vorteilen auch gewisse Nachteile gegenüber: Bei der Kontrolle wird in der Regel seitens des Anbieters, also beispielsweise seitens der Fluggesellschaft ein "materieller Ausweis" von dem Benutzer gefordert, beispielsweise ein Lichtbildausweis, eine Kreditkarte, ein Führerschein, eine "Vielflieger-Karte" oder ähnliches. Bisweilen wird auch eine Kombination mehrerer derartiger Ausweismittel verlangt. Durch das Erfordernis dieses Ausweisens relativiert sich der Vorteil "papierlos" für den Benutzer. Bei Betrachtung des gesamten Systems, also Bereitstellung und Kontrolle des elektronischen Tickets, ist der Vorteil " papierlos" für den Benutzer nicht mehr gegeben. Bei Vorzeigen der Kreditkarte offenbart der Benutzer darüber hinaus sicherheitsrelevante Daten, was für ihn mit einem entsprechenden, unter Umständen erheblichen Mißbrauchsrisiko verbunden ist.

In diesem Zusammenhang ist zu bemerken, dass im beispielhaft genannten Fall "elektronisches Flug-Ticket" der Benutzer am Flughafen seinen Ausweis ohnedies bereithalten muss und insofern der genannte Nachteil nicht offensichtlich als gravierend empfunden werden mag. Allerdings sind im Allgemeinen viele anderweitige Fälle denkbar, in denen eine entsprechende Ausweiskontrolle als un verhältnismäßige Unannehmlichkeit für den Benutzer anzusehen ist und darüber hinaus sehr umständlich in der Durchführung der Kontrolle. Als Beispiele hierfür denke man an die Kontrolle eines Straßenbahn- oder Bahn-Tickets, eines Parkhaus-Tickets, einer Kino-Eintrittskarte oder ähnlichem.

Aus der internationalen PCT- Anmeldung WO 2004/019581 A1 ist ein Verfahren bekannt, mit dem es unter Nutzung eines unabhängigen Identifikationsmoduls möglich ist, einen Benutzer eines Mobilterminals zu identifizieren und weiterhin eine Aktionsberechtigung für diesen Benutzer zu erzeugen. Der Benutzer fordert dazu mithilfe des Mobilterminals bei dem Identifikationsmodul die Aktionsberechtigung an, von dem Identifkationsmodul wird dann ein einmalgültiger und zeitlich beschränkt gültiger Aktionscode erzeugt, der sowohl an den Benutzer, als auch an ein Terminal einer beteiligten dritten Partei gesendet wird. Zur Terminierung der Aktion gibt der Benutzer eine PIN in das Terminal der dritten Partei ein oder sendet die PIN direkt oder über das Identifikationsmodul an das Terminal der dritten Partei.

Dieses Verfahren lässt sich auch zum Kauf eines elektronischen Tickets verwenden. In diesem Fall ist vorgesehen, dass der Benutzer zusammen mit der "Berechtigungs-Anforderung" die Kenn-Nummer des betreffenden Zahlungsterminals an der (mobilen oder stationären) Fahrkarten- Verkaufsstelle für das "E-Ticketing" angibt. Vom Identifikationsmodul wird dann der Aktionscode zusammen mit einer, dem Benutzer bekannten "Applikations-PIN" an das Zahlungsterminal gesendet. Zur Terminierung des Vorgangs gibt der Benutzer am Zahlungsterminal die Applikations-PIN ein. Daraufhin wird ein elektronisches Ticket erstellt und eine Quittung als Beleg an den Benutzer ausgegeben. Der Vorteil dieses Verfahrens besteht darin, dass der Benutzer keine sicherheitsrelevanten Informationen, wie beispielsweise seine Kreditkarten-Nummer, an die dritte Stelle aushändigen muss.

Allerdings ist im Fall einer Kontrolle, beispielsweise durch einen Zugschaffner, vorgesehen, dass sich der Benutzer - wie oben bereits für den allgemeinen Fall des elektronischen Tickets nach dem Stand der Technik erwähnt - gegenüber dem Kontrollpersonal ausweisen muss, oder aber den ausgedruckten Beleg vorzeigt. Der Vorteil "papierlos" wird also auch in diesem Fall bei Betrachtung des Gesamtsystems "Bereitstellung und Kontrolle" nicht erzielt.

Aus der oben erwähnten GB 2 390 211 A ist bereits ein Abwicklungssystem bekannt, welches eine Zentrale und ein Mobilterminal des Benutzers umfasst, wobei die Zentrale Mittel zur Erzeugung des elektronischen Tickets und zur Übersendung des elektronischen Tickets an das Mobilterminal aufweist und wobei das elektronische Ticket einen verschlüsselten Teil aufweist sowie Mittel zum Empfang und zur Darstellung des verschlüsselten Teils aufweist.

Aus der WO 03/005145 A2 ist ein Verfahren und System bekannt, bei welchem für Mobilgeräte mit limitiertem Speicher Voucher bereitgestellt werden, die Zugang zu in einem Netz bzw. auf einem Server eines Netzes gespeicherten digitalen Inhalt gewährleisten. Der digitale Inhalt ist dabei im Allgemeinen verschlüsselt und der auf dem mobilen Gerät gespeicherte Wertgutschein (Voucher) kann einen entsprechenden Schlüssel aufweisen, mit welchem der digitale Inhalt auf dem Mobilterminal in entschlüsselter Form wiedergegeben werden kann.

Gegenüber diesem Stand der Technik liegt der vorliegenden Erfindung die Aufgabe zu Grunde, die Sicherheit und Authentizität elektronischer Tickets einschließlich ihrer Zuordnung zu dem Benutzer weiter zu verbessern und dabei dennoch eine möglichst einfache Handhabbarkeit zu gewährleisten.

Diese Aufgabe wird durch ein Abwicklungssystem gemäß Anspruch 1 erzielt. Das erfindungsgemäße Abwicklungssystem sieht gemäß Anspruch 1 vor, dass
- ein ausführbares Programm auf dem Mobilterminal (10) installiert ist,
- welches zur Darstellung einer Ticketinformation und zum Aufruf einer Kontrollfunktion programmiert ist,
- wobei der Aufruf des Programms die Eingabe einer von dem Benutzer vorab festgelegten Programm-Codenummer
- und die Eingabe eines nur einmal und zeitlich beschränkt gültigen Aktivierungscodes erfordert, der vorab von der Zentrale (1) festgelegt und an den Benutzer übermittelt wird,
- wobei die Zentrale (1) und das Mobilterminal (10) über ein Netzwerk verbindbar sind und
- entweder ein aktueller Entschlüsselungscode im Rahmen einer Kontrolle an das Mobilterminal (10) gesendet oder
- der verschlüsselte Teil des elektronischen Tickets an die Zentrale übermittelt, dort entschlüsselt und als entschlüsselter Teil wieder an das Mobilterminal (10) zurück übermittelt wird.

Nach einem ersten Aspekt der Erfindung ist ein Abwicklungssystem zur Bereitstellung und Kontrolle eines elektronischen Tickets für einen Benutzer vorgesehen. Das Abwicklungssystem weist dabei eine Zentrale und ein Mobilterminal auf, wobei der Benutzer Zugriffsmöglichkeit auf das Mobilterminal hat. Bei dem Mobilterminal kann es sich beispielsweise um ein Mobiltelefon, um einen PDA (personal digital assistant), um einen Palmtop oder dergleichen handeln.
Die Zentrale weist Mittel zur Erzeugung des elektronischen Tickets und zur Übersendung des elektronischen Tickets an das Mobilterminal auf. Beispielsweise kann hierfür der bekannte SMS-Dienst (SMS: short message service) des GSM-Standards (GSM: global system for mobile) oder ein anderer Dienst mit vergleichbaren Eigenschaften vorgesehen sein. Dabei ist es einem Anbieter des elektronischen Tickets möglich, sich hierfür der Zentrale zu bedienen.

Das elektronische Ticket weist erfindungsgemäß einen verschlüsselten Teil auf. Die Verschlüsselung kann also von der Zentrale aus bei Erzeugung des elektronischen Tickets durchgeführt werden, wobei der Verschlüsselungscode von einem Betreiber der Zentrale im Prinzip frei gewählt werden kann.

Das Mobilterminal weist Mittel zum Empfang des elektronischen Tickets und Mittel zur Darstellung des verschlüsselten Teils auf. Beispielsweise kann vorgesehen sein, dass der verschlüsselte Teil auf einer Anzeige, beispielsweise auf einem Display des Mobilterminals angezeigt werden kann. Auch ist möglich, dass zur Darstellung des verschlüsselten Teils ein anderweitiges charakteristisches, visuelles oder auch akustisches oder taktiles Signal oder dergleichen von dem Mobilterminal erzeugt wird.

Zur Durchführung ist dabei vorgesehen, dass der Entschlüsselungscode dem Benutzer bis zum Zeitpunkt der Kontrolle nicht bekannt gemacht wird.

Mit dem erfindungsgemäßen System kann also ein elektronisches Ticket für den Benutzer bereitgestellt werden, indem dieses von der Zentrale, beispielsweise auf Anforderung des Benutzers, erzeugt und an das Mobilterminal des Benutzers übermittelt wird.

Zur Kontrolle des elektronischen Tickets wird der verschlüsselte Teil mithilfe des Mobilterminals dargestellt und von einer Kontrollperson oder gegebenenfalls von einer Kontrollvorrichtung erfasst.

Im Fall einer Kontrolle durch eine Kontrollperson wird zur Durchführung des nicht beanspruchten erfindungsgemäßen Verfahrens der Kontrollperson vorab mitgeteilt, wie der verschlüsselte Teil beschaffen sein muss, um von der Gültigkeit des elektronischen Tickets zu zeugen. Beispielsweise kann hierfür also vorgesehen sein, dass der verschlüsselte Teil auf dem Display des Mobilterminals in Form einer bestimmten Zeichenfolge dargestellt wird. Der Kontrollperson ist in diesem Fall also bekannt, welche Merkmale diese Zeichenfolge aufweisen muss, um von der Gültigkeit des elektronischen Tickets zu zeugen. Im Fall einer automatischen Kontrolle ist vorgesehen, dass der Entschlüsselungscode von der Zentrale aus in eine entsprechende Kontrollvorrichtung eingegeben wird.

Das erfindungsgemäße Abwicklungssystem ermöglicht also die Durchführung eines vollständig "papierlosen" Verfahrens für Bereitstellung und Kontrolle eines elektronischen Tickets. Insbesondere ist es für den Benutzer nicht erforderlich, sich bei der Kontrolle persönlich auszuweisen. Auch muss er dabei keine sicherheitsrelevanten Daten, wie beispielsweise eine Kreditkartennummer oder dergleichen, preisgeben.

Vorteilhaft weist das Mobilterminal Mittel zur Anzeige einer Ticket-Information des elektronischen Tickets auf. Der Benutzer kann also somit unmittelbar nach Empfang des elektronischen Tickets die Ticket-Information des elektronischen Tickets, beispielsweise auf der Anzeige des Mobilterminals sichtbar machen. Bei der Information kann es sich um Angaben handeln, die es dem Benutzer ermöglichen, sich darüber zu informieren, wozu ihn das elektronische Ticket berechtigt. Im Fall einer Fahrkarte kann es sich bei der Information also beispielsweise um die Angabe einer Start-Haltestelle und einer Ziel-Haltestelle, gegebenenfalls um einen Berechtigungszeitraum usw. handeln.

Dabei verfügt das Mobilterminal über eine aufrufbare Kontrollfunktion, wobei die Kontrollfunktion einen Entschlüsselungscode zur Umwandlung des verschlüsselten Teils in einen entschlüsselten Teil umfasst, und wobei der entschlüsselte Teil mithilfe des Mobilterminals, beispielsweise auf einer Anzeige oder einem Display dargestellt werden kann.

Zur Kontrolle ist dabei vorgesehen, dass die Kontrollfunktion von einer Kontrollperson oder gegebenenfalls von einer Kontrollvorrichtung aufgerufen wird. Daraufhin wird also der entschlüsselte Teil angezeigt, der von der Gültigkeit des elektronischen Tickets zeugen kann.

Es ist vorgesehen, dass zum Aufruf der Kontrollfunktion die Eingabe einer Codenummer, beispielsweise in Form einer PIN erforderlich ist. Zur Durchführung wird dem Benutzer bis zum Zeitpunkt der Kontrolle diese Codenummer nicht bekannt gemacht. Einer Kontrollperson wird zur Durchführung der Kontrolle vorab die Codenummer bekannt gemacht oder gegebenenfalls wird die Codenummer in eine Kontrollvorrichtung in geeigneter Weise eingegeben. Dies erhöht die Sicherheit bzw. reduziert das Risiko eines Mißbrauchs. Zur Durchführung wird also beispielsweise durch die Kontrollperson die Kontrollfunktion aufgerufen und die Codenummer eingegeben, woraufhin der entschlüsselte Teil angezeigt wird. Der entschlüsselte Teil kann dabei beispielsweise zumindest teilweise eine Ticket-Information umfassen.

Das Mobilterminal weist einen Speicher auf, in dem ein ausführbares Programm zum Aufruf der Kontrollfunktion abspeicherbar ist. Weiterhin vorteilhaft ist der Speicher körperlich fest mit dem Mobilterminal verbunden oder in das Mobilterminal integriert. Es kann weiterhin vorgesehen sein, dass der Speicher gegebenenfalls zusätzlich zu einem weiteren, in einer SIM-Karte des Mobilterminals integrierten Speicher vorgesehen ist. Dies ermöglicht die Installation eines Programms, mit dem es für den Benutzer, beispielsweise per Menü-Steuerung, besonders handhabungsfreundlich ermöglicht wird, die Anforderung des elektronischen Tickets sowie gegebenenfalls weitere Schritte auszuführen.

Vorteilhaft ist das Programm derart beschaffen, dass es auf einer objektorientierten, platformneutralen Programmiersprache basiert. Beispielsweise kann es auf einer Programmiersprache der Gattung JAVA oder auf einer Programmiersprache mit vergleichbaren Eigenschaften basieren. Beispielsweise kann das Programm in J2ME (*Java 2 Micro Edition*) programmiert sein.

Vorteilhaft handelt es sich bei dem Programm um ein MIDlet oder um ein Programm mit vergleichbaren Eigenschaften. Dabei bezeichnet MIDlet eine J2ME-Anwendung für "MIDP-Devices" (MIDP: *mobile information device profile*). Dies ermöglicht eine drahtlose Programmierung des Mobilterminals.

Vorteilhaft sind die Zentrale und das Mobilterminal über ein Netzwerk, beispielsweise das Internet oder ein Intranet, verbindbar. Dadurch wird beispielsweise ermöglicht, dass im Rahmen der Kontrolle der aktuell gültige Entschlüsselungscode von der Zentrale an das Mobilterminal übermittelt wird. Alternativ kann der verschlüsselte Teil zur Entschlüsselung an die Zentrale übermittelt werden und nach erfolgter Entschlüsselung durch die Zentrale als entschlüsselter Teil wieder an das Mobilterminal zurück gesendet werden.

Weiterhin vorteilhaft verfügt das Mobilterminal hierbei über eine Funktionalität, beispielsweise über eine WAP-Funktionalität (WAP: *wireless application protocol*), mit der Netzwerk-Inhalte, also beispielsweise Webinhalte, drahtlos bereitgestellt werden können.

Auch die Programmierung des Mobilterminals, also beispielsweise die Installation des MIDlets, kann unter Nutzung dieser Netzwerkverbindung erfolgen. Das MIDlet kann also in diesem Fall von der Zentrale für den Benutzer auf einfache Weise zur Verfügung gestellt werden.

Bei Nutzung des oben erwähnten Programms kann die Durchführung der Kontrolle in das Programm integriert werden. Es kann also beispielsweise vorgesehen sein, dass per Menü-Steuerung die Kontrollfunktion aufgerufen wird und - nach erfolgter Eingabe der Codenummer durch die Kontrollperson - über die aufgebaute WAP-Verbindung der aktuelle Entschlüsselungscode übermittelt wird bzw. die Entschlüsselung, wie erwähnt, in der Zentrale erfolgt.

Vorteilhaft ist es von der Zentrale aus möglich, den Entschlüsselungscode, beispielsweise in bestimmten zeitlichen Abschnitten, also beispielsweise täglich, zu ändern. Auf diese Weise kann das Mißbrauchsrisiko weiter gesenkt werden.

Vorteilhaft weist die Zentrale Mittel zum Zugriff auf ein Konto des Benutzers auf. Dazu kann beispielsweise die Zentrale über ein Netzwerk mit einer Datenbank eines Geld- oder Kreditinstituts verbunden sein, so dass auf diesem Verbindungsweg von der Zentrale aus auf das Konto des Benutzers zugegriffen und eine Überweisung getätigt werden kann. Dies ermöglicht eine besonders einfache Abwicklung des Kaufs des elektronischen Tickets. Bei dem Konto kann es sich beispielsweise um ein Prepaid-, ein Postpaid-, ein Bank- oder ein Kreditkartenkonto handeln.

Gemäß einem weiteren nicht beanspruchten Aspekt der Erfindung ist ein Abwicklungssystem zur Bereitstellung und Kontrolle eines elektronischen Tickets für einen Benutzer vorgesehen, das eine Zentrale, ein Mobilterminal des Benutzers und ein Lesegerät aufweist. Dabei weist das Mobilterminal einen körperlich fest mit dem Mobilterminal verbundenen Sender auf, der eine dem Mobilterminal eindeutig zugeordnete Geräte-Identifikationsnummer aussenden kann. Weiterhin ist das Lesegerät dazu ausgelegt die Geräte-Identifikationsnummer ortsnah, beispielsweise etwa in Sicht- oder Greifweite, zu erfassen. Die Zentrale weist Mittel zur Erzeugung des elektronischen Tickets bei eindeutiger Zuordnung zwischen dem elektronischen Ticket und der Geräte-Identifikationsnummer auf.

Mit dem erfindungsgemäßen System kann also ein elektronisches Ticket für den Benutzer bereitgestellt werden, indem dieses von der Zentrale, beispielsweise auf Anforderung des Benutzers, erzeugt wird. Dabei wird durch die Zentrale eine eindeutige Zuordnung zwischen dem elektronischen Ticket und der Geräte-Identifikationsnummer hergestellt. In der Zentrale muss hierfür also die Geräte-Identifikationsnummer vorliegen. Beispielsweise kann sie von dem Benutzer der Zentrale hierfür vorab mitgeteilt werden.

Bei einer Kontrolle wird dann mithilfe des Lesegeräts die Geräte-Identifikationsnummer erfasst und anhand der Zuordnungs-Information kontrolliert, ob für die erfasste Geräte-Identifikationsnummer ein gültiges elektronisches Ticket vorliegt. Beispielsweise kann vorgesehen sein, dass einer Kontrollperson die Information über die Zuordnung zwischen dem elektronischen Ticket und der Geräte-Identifikationsnummer bekannt ist. Die Kontrollperson kann dann mit dem Lesegerät die Geräte-Identifikationsnummer erfassen und anhand der Zuordnung kontrollieren, ob ein gültiges elektronisches Ticket vorliegt.

Insbesondere eignet sich jedoch das Abwicklungssystem in diesem Fall zur Durchführung eines automatischen Verfahrens, da zur Kontrolle vorgesehen sein kann, dass der Benutzer einfach sein Mobilterminal an dem Lesegerät, das sich an einer "Schranke" befindet, vorbeiführen muss.

Das erfindungsgemäße Abwicklungssystem ermöglicht also die Durchführung eines vollständig "papierlosen" Verfahrens für Bereitstellung und Kontrolle eines elektronischen Tickets. Insbesondere ist es für den Benutzer nicht erforderlich, sich bei der Kontrolle persönlich auszuweisen. Auch muss er keine sicherheitsrelevanten Daten, wie beispielsweise eine Kreditkartennummer oder dergleichen, preisgeben.

Vorteilhaft liegt der Sender in Form eines Transponders vor. Der Transponder hat die Eigenschaft, auf Empfang von einer Strahlung, die von dem Lesegerät ausgestrahlt wird, mit Aussendung einer weiteren Strahlung zu reagieren, die die Information der Geräte-Identifikationsnummer trägt. Bei dem Transponder kann es sich beispielsweise um einen passiven Transponder handeln, der ohne eigene Energiequelle funktioniert und aus einer Metallspule und einem Mikrochip bestehen kann, wobei in dem Chip die Geräte-Identifikationsnummer gespeichert ist. Bei der Strahlung, die von dem Lesegerät ausgesendet wird und die von dem Transponder empfangen werden kann, kann es sich beispielsweise um eine Strahlung aus dem Radiowellen-Bereich handeln, beispielsweise um eine Strahlung mit einer Frequenz von 13,56 MHz. Die Transponder-Technologie ist als solche bekannt, weshalb hier nicht näher darauf eingegangen wird.

Vorteilhaft weist das Mobilterminal Mittel zum Empfang und zur Anzeige des elektronischen Tickets auf. Dies ermöglicht insbesondere die sofortige Überprüfung der Ticket-Infromation durch den Benutzer, in analoger Weise, wie oben beim ersten Aspekt bereits dargestellt.

Vorteilhaft sind die Zentrale und das Mobilterminal über ein Netzwerk, beispielsweise das Internet oder ein Intranet verbindbar.

Vorteilhaft weist das Mobilterminal einen Speicher auf, in dem ein Programm abspeicherbar ist, das vorzugsweise auf einer objektorientierten, platformneutralen Programmiersprache basiert. Dies ermöglicht, ein Programm auf dem Mobilterminal zu installieren, das beispielsweise über Menü-Steuerung eine besonders bedienerfreundliche Handhabung für die Anforderung des elektronischen Tickets und den Empfang desselben ermöglicht.

Vorteilhaft basiert das Programm auf einer Programmiersprache der Gattung JAVA oder einer Programmiersprache mit vergleichbaren Eigenschaften. Weiterhin vorteilhaft handelt es sich bei dem Programm um ein MIDlet oder ein Programm mit vergleichbaren Eigenschaften. Dies ermöglicht, das Programm von der Zentrale aus bereitzustellen und an das Mobilterminal zu übermitteln, so dass es auf dem Speicher des Mobilterminals installiert wird und dort anschließend als ausführbares Programm vorliegt.

Für das nicht beanspruchte erfindungsgemäße Verfahren ist in Ergänzung zu den obigen Ausführungen Folgendes vorgesehen:
Das entsprechende erfindungsgemäße Verfahren dient der Bereitstellung und der Kontrolle eines elektronischen Tickets für einen Benutzer. Es wird gemäß einem ersten Aspekt unter Nutzung einer Zentrale und eines Mobilterminals des Benutzers durchgeführt. Die Zentrale weist dabei Mittel zur Erzeugung des elektronischen Tickets und zur Übersendung des elektronischen Tickets an das Mobilterminal des Benutzers auf. Das elektronische Ticket weist dabei einen verschlüsselten Teil auf. Das Mobilterminal weist Mittel zum Empfang des elektronischen Tickets und zur Darstellung des verschlüsselten Teils auf.

In einem ersten Schritt wird von der Zentrale das elektronische Ticket mit einem verschlüsselten Teil erzeugt.

In einem weiteren Schritt wird das erzeugte Ticket an das Mobilterminal übermittelt.

Zur Kontrolle wird in einem weiteren Schritt der verschlüsselte Teil des elektronischen Tickets mithilfe des Mobilterminals dargestellt.

Bei Durchführung der Kontrolle durch eine Kontrollperson wird der Kontrollperson vorab mitgeteilt, wie der verschlüsselte Teil beschaffen sein muss, um von der Gültigkeit des elektronischen Tickets zu zeugen. Diese Information wird dem Benutzer bis zur Durchführung der Kontrolle nicht mitgeteilt.

Weiterhin vorteilhaft verfügt das Mobilterminal über eine aufrufbare Kontrollfunktion, wobei die Kontrollfunktion den Entschlüsselungscode umfasst, mit dem der verschlüsselte Teil des elektronischen Tickets entschlüsselt werden kann. Dabei ist vorteilhaft zum Aufruf der Kontrollfunktion die Eingabe einer Codenummer, beispielsweise in Form einer PIN erforderlich. Zur Kontrolle wird die Kontrollfunktion aufgerufen und durch eine Kontrollperson oder den Benutzer selbst die Codenummer eingegeben. Es kann dabei optional vorgesehen sein, dass die Codenummer dem Benutzer nicht bekannt gemacht wird, sondern nur der Kontrollperson zur Durchführung der Kontrolle des elektronischen Tickets.

Der verschlüsselte Teil des elektronischen Tickets wird daraufhin in den entschlüsselten Teil umgewandelt und auf der Anzeige des Mobilterminals für die Kontrollperson dargestellt. Dadurch ist es der Kontrollperson möglich, festzustellen, ob das elektronische Ticket gültig ist.

Vorteilhaft sind die Zentrale und das Mobilterminal bei der Kontrolle über ein Netzwerk, beispielsweise über das Internet verbunden. Der aktuelle Entschlüsselungscode wird dabei zur Kontrolle von der Zentrale an das Mobilterminal gesendet und dort von der Kontrollfunktion verwendet. Alternativ kann vorgesehen sein, dass über diese Verbindung der verschlüsselte Teil des elektronischen Tickets an die Zentrale übermittelt wird, dort entschlüsselt wird und als entschlüsselter Teil wieder zurück an das Mobilterminal übermittelt wird.

Vorteilhaft wird der Verschlüsselungscode von der Zentrale in bestimmten zeitlichen Abständen, beispielsweise täglich geändert.

Vorteilhaft wird von dem Benutzer mithilfe des Mobilterminals vor Erstellung des elektronischen Tickets, also vorab durch eine Anforderungs-Nachricht bei der Zentrale das elektronische Ticket angefordert.

Vorteilhaft wird nach Anforderung des elektronischen Tickets durch den Benutzer die Bezahlung des elektronischen Tickets von der Zentrale aus durch Überweisung von dem Konto des Benutzers durchgeführt.

Vor Anforderung des elektronischen Tickets wird ein ausführbares Programm, beispielsweise in Form eines MIDlets, auf dem Mobilterminal installiert, das beispielsweise durch Menü-Steuerung dem Benutzer in komfortabler Weise ermöglicht, die Schritte, die von ihm zur Durchführung des Verfahrens getätigt werden müssen, vorzunehmen. Das Programm ist zur Darstellung der Ticket-Information und zum Aufruf der Kontrollfunktion programmiert. Weiterhin kann das Programm dazu dienen, die Anforderung und den Kauf des elektronischen Tickets bedienungsfreundlich abzuwickeln, indem auf Anforderung des Benutzers die entsprechende Kontobewegung und Überweisung ausgeführt wird.

Der Aufruf des Programms erfordert die Eingabe einer von dem Benutzer vorab festgelegten Programm-Codenummer, beispielsweise in Form einer PIN.

Weiterhin erfordert der Aufruf des Programms die Eingabe eines Aktivierungscodes, der vorab von der Zentrale festgelegt und an den Benutzer übermittelt wird. Vorteilhaft ist der Aktivierungscode nur einmal gültig und/oder zeitlich beschränkt gültig. Der Aktivierungscode kann beispielsweise per Internet-Verbindung an den Benutzer übermittelt werden.

Weiterhin vorteilhaft ist vorgesehen, dass in einem vorbereitenden Schritt bei der Zentrale ein Benutzerprofil angelegt wird, das neben persönlichen Angaben des Benutzers, wie beispielsweise Namen und Anschrift, auch eine Kontoverbindung des Benutzers und die Rufnummer des Mobilterminals enthält.

Gemäß einem zweiten nicht beanspruchten Aspekt ist ein Verfahren zur Bereitstellung und Kontrolle eines elektronischen Tickets für einen Benutzer vorgesehen. Das Verfahren wird unter Nutzung einer Zentrale, eines Mobilterminals des Benutzers und eines Lesegeräts durchgeführt, wobei das Mobilterminal über einen integrierten Sender verfügt, der eine Geräte-Identifikationsnummer des Mobilterminals aussenden kann, die ortsnah von dem Lesegerät erfasst werden kann.

Zum Ablauf ist dabei vorgesehen, dass in einem ersten Schritt die Geräte-Identifikationsnummer an die Zentrale übermittelt wird.

In einem zweiten Schritt wird von der Zentrale, beispielsweise auf Anforderung des Benutzers, das elektronische Ticket von der Zentrale erstellt, und zwar unter eindeutiger Zuordnung zu der Geräte-Identifikationsnummer.

In einem weiteren Schritt wird dann die Zuordnungs-Information an eine Kontrollstelle übermittelt.

Zur Kontrolle wird von der Kontrollstelle aus mithilfe des Lesegeräts die Geräte-Identifikationsnummer des Mobilterminals erfasst und anhand der vorliegenden Zuordnungs-Information geprüft, ob ein gültiges elektronisches Ticket vorliegt.

Vorteilhaft wird weiterhin der Geräte-Identifikationsnummer die dazugehörige Rufnummer des Mobilterminals zugeordnet, und diese Information an der Zentrale zur Verfügung gestellt. Bei Anforderung des elektronischen Tickets kann dann der Benutzer die Rufnummer des ("seines") Mobilterminals der Zentrale übermitteln. Eine Nennung der entsprechenden Geräte-Identifikationsnummer ist dann im Rahmen der Ticket-Anforderung nicht erforderlich. In der Zentrale kann dann der genannten Rufnummer die Geräte-Identifikationsnummer und das zu erstellende elektronische Ticket eindeutig zugeordnet werden.

Hinsichtlich weiterer Verfahrensschritte wird auf entsprechende Schritte des Verfahrens gemäß dem ersten Aspekt verwiesen.

Weitere Merkmale, Vorteile und Eigenschaften sollen nunmehr anhand einer detaillierten Beschreibung von Ausführungsbeispielen und mit Bezug auf die Figuren der beigefügten Zeichnungen erläutert werden. Es zeigen:
- Fig. 1: eine symbolische Darstellung der Komponenten des erfindunsgemäßen Abwicklungssystems, sowie eines erfindungsgemäßen Ablaufplans zur Anlage eines neuen Benutzerprofils bei der Zentrale,
- Fig. 2: ein Ablaufschema zur Aktivierung des Kontos des Benutzers,
- Fig. 3: ein Ablaufschema gemäß dem ersten Ausführungsbeispiel zur Durchführung der Kontrolle des elektronischen Tickets,
- Fig. 4: ein Ablaufschema gemäß einem zweiten Ausführungsbeispiel, und
- Fig. 5: ein symbolische Darstellung zum prinzipiellen Ablauf bei der Bereitstellung und Kontrolle eines elektronischen Tickets nach dem Stand der Technik zur Begriffserläuterung.

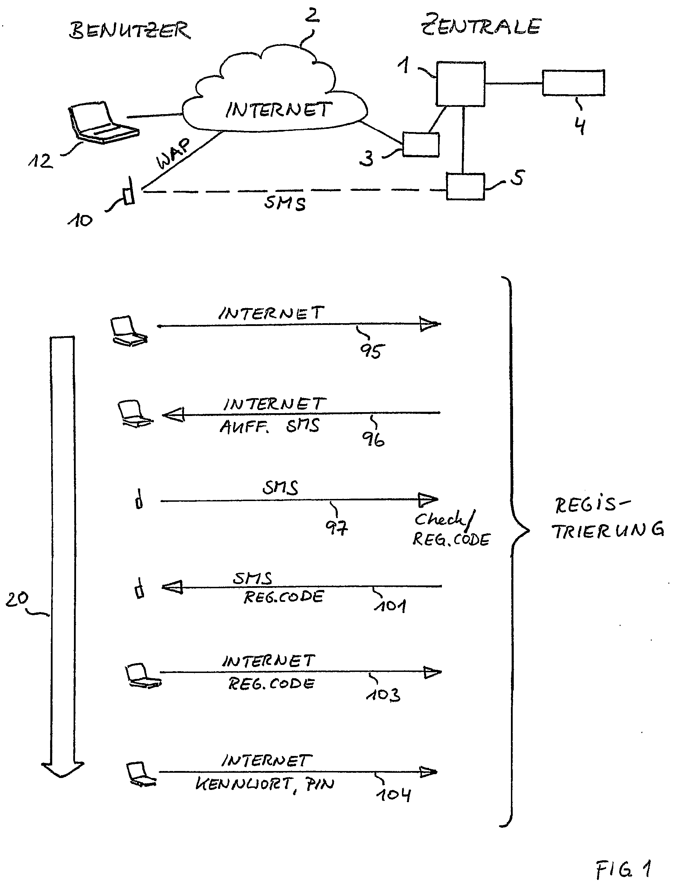

In den Figuren 1 bis 3 ist ein erstes Ausführungsbeispiel für einen erfindungsgemäßen Ablauf mit einem erfindungsgemäßen Abwicklungssystem zur Bereitstellung und Kontrolle eines elektronischen Tickets schematisch dargestellt. An dem erfindungsgemäßen Verfahren sind insbesondere ein Benutzer des elektronischen Tickets und eine Zentrale 1 beteiligt.

Wie in Fig. 1 dargestellt, weist das System die Zentrale 1 auf, die ein Anbieter eines elektronischen Tickets nutzt, die jedoch nicht von dem Anbieter selbst verwaltet bzw. betrieben werden muss. Die Zentrale 1 verfügt über einen mit dem Internet 2 verbundenen Server 3 und ein SMS-Center 5, mit dem SMS-Nachrichten versendet werden können. Die Zentrale 1 steht weiterhin mit einer Datenbank 4 eines Geld- oder Kreditinstituts in Verbindung. Diese Verbindung kann beispielsweise über den Server 3 vorgesehen sein. Bei dem Geld- oder Kreditinstitut hat der Benutzer ein Konto und über die Datenbank 4 ist ein Zugriff auf das Konto des Benutzers möglich. Insbesondere sind also auf diesem Wege entsprechende Überweisungen ausführbar. Außerdem verfügt die Zentrale 1 über einen, in Fig. 1 nicht näher dargestellten, internen Speicher, in dem Angaben des Benutzers in Form eines Benutzerprofils gespeichert werden können.

Weiterhin weist das System ein Mobilterminal 10 mit SMS-Funktionalität auf, beispielsweise ein Mobiltelefon, einen PDA (*personal digital assistance*), einen "Palm" oder dergleichen. Der Benutzer hat auf das Mobilterminal 10 Zugriff. Im Folgenden ist es der Einfachheit halber sinngemäß als "das Mobilterminal 10 des Benutzers" bezeichnet.

Das Mobilterminal 10 weist gemäß dem hier dargestellten ersten Ausführungsbeispiel ein Mittel zur Darstellung oder Anzeige eines elektronischen Tickets, genauer gesagt von Informationen des elektronischen Tickets, auf. Hierzu kann in an sich bekannter Weise eine Anzeige oder ein Display dienen.

Weiterhin verfügt das Mobilterminal 10 über eine Internet-Anbindung, beispielsweise mittels einer WAP-Funktionalität (WAP: *wireless application protocol*), einem Standard für die Bereitstellung von Webinhalten und anderen datenorientierten Diensten über drahtlose Netzwerke.

Weiterhin ist das Mobilterminal 10 programmierbar. Gemäß dem hier dargestellten Ausführungsbeispiel unterstützt das Mobilterminal 10 dazu eine Programmiersprache der Gattung JAVA, beispielsweise J2ME (*Java 2 Micro Edition)* oder eine andere Programmiersprache mit vergleichbaren Eigenschaften. Außerdem weist das Mobilterminal 10 einen Speicher auf, auf dem eine in der entsprechenden Programmiersprache programmierte Anwendung abgespeichert werden kann. Dabei ist dieser Speicher von einer gegebenenfalls vorhandenen SIM-Karte des Mobilterminals 10 unabhängig.

Bei dem abgespeicherten Programm bzw. der abspeicherbaren Anwendung kann es sich beispielsweise um ein sogenanntes MIDlet handeln. Ein derartiges Programm bzw. eine derartige Anwendung kann mithilfe einer WAP- bzw. Internetverbindung auf das Mobilterminal 10 heruntergeladen und auf dem genannten Speicher abgespeichert werden und liegt dann als für den Benutzer auf dem Mobilterminal 10 ausführbares Programm vor.

Außerdem verfügt der Benutzer über einen PC 12 mit Internet-Anschluss und installierter E-Mail-Software.

Das System ermöglicht also von der Zentrale 1 aus einen Zugang zu dem Internet. Es kann also insbesondere auf diesem Wege eine Website der Zentrale 1 in das Internet 2 gestellt werden. Hierzu kann der Server 3 dienen. Weiterhin kann über das Internet 2 eine Internetverbindung zu dem PC 12 des Benutzers hergestellt werden. Über diese Verbindung kann beispielsweise eine E-mail an den Benutzer gesendet werden. Weiterhin kann von der Zentrale 1 aus mithilfe des SMS-Centers 5 eine SMS-Nachricht an das Mobilterminal 10 gesendet werden und auch eine SMS-Nachricht von dem Mobilterminal 10 empfangen werden.

Von dem PC 12 des Benutzers aus kann eine Internetverbindung zu der Zentrale 1 aufgebaut werden. Insbesondere kann also von dem PC 12 aus auf eine, von der Zentrale 1 in das Internet 2 gestellte Website zugegriffen werden. Von dem Mobilterminal 10 aus kann der Benutzer sowohl eine SMS-Nachricht an die Zentrale 1 senden, als auch über WAP eine Internetverbindung zu der Zentrale 1 aufbauen.

Zum Ablauf des erfindungsgemäßen Verfahrens ist vorgesehen, dass der Benutzer sich zunächst bei der Zentrale 1 registrieren lässt. Die Registrierung des Benutzers ist dabei nur einmal, und zwar vor der ersten Anforderung eines elektronischen Tickets durch den Benutzer erforderlich. Bei weiteren Anforderungen von elektronischen Tickets durch diesen Benutzer ist der Schritt der Registrierung nicht mehr erforderlich. Die Registrierung wirkt also für einen Benutzer, einmal getätigt, bis auf Weiteres.

In Fig. 1 sind im unteren Figurenabschnitt symbolisch die Schritte des erfindungsgemäßen Ablaufs zur Registrierung dargestellt. Der dicke Pfeil 20 in Fig. 1 stellt den zeitlichen Ablauf des angegebenen Schemas dar.

Im Rahmen der Registrierung wird von der Zentrale 1 ein "Benutzerprofil" des Benutzers angelegt. Das Benutzerprofil enthält persönliche Angaben des Benutzers, wie beispielsweise seinen Namen und seine Anschrift. Weiterhin enthält das Benutzerprofil Angaben zur Erreichbarkeit des Benutzers, und zwar insbesondere eine vom Benutzer angegebene Mobilfunk-Rufnummer, und zwar die Nummer seines Mobilterminals 10 und eine E-mail-Adresse des Benutzers, unter der der Benutzer mithilfe seines PC's 12 über das Internet 2 erreichbar ist. Schließlich enthält das Benutzerprofil Angaben über ein Konto des Benutzers, also beispielsweise eine entsprechende Kontoverbindung, wobei von der Zentrale 1 aus auf dieses Konto zugegriffen werden kann, also Kontobewegungen ausgelöst werden können. Hierzu ist die oben genannte Verbindung der Zentrale 1 zu der Datenbank 4 des entsprechenden kontoführenden Geld- bzw. Kreditinstituts vorgesehen. Bei dem Konto kann es sich auch beispielsweise um ein Kreditkartenkonto handeln.

Zum Ablauf der Registrierung ist vorgesehen, dass der Benutzer in einem ersten Schritt 95 auf einer entsprechenden Website der Zentrale 1, also über eine Internetverbindung diejenigen Daten eingibt, die zur Anlage des Benutzerprofils erforderlich sind.

Die Daten des Benutzerprofils werden in der Zentrale 1 auf dem dafür vorgesehenen internen Speicher abgespeichert.

In einem weiteren Schritt 96 wird der Benutzer von der Zentrale 1 aufgefordert, über sein Mobilterminal 10 eine SMS an die Zentrale 1 zu senden. Diese Aufforderung kann beispielsweise via Internet, also beispielsweise per E-Mail erfolgen. Daraufhin wird vom Mobilterminal 10 des Benutzers wie angefordert in einem weiteren Schritt 97 eine SMS an die Zentrale 1 gesendet.

Nach Erhalt der SMS von Schritt 97 wird seitens der Zentrale 1 die Rufnummer des Mobilterminals 10 identifiziert und überprüft ("Check").

Beispielsweise kann an dieser Stelle vorgesehen sein, dass die Rufnummer dieser zuletzt genannten SMS mit derjenigen Rufnummer übereinstimmt, die im Rahmen von Schritt 95 bei der Anlage des Benutzerprofils abgespeichert worden ist. In diesem Fall fällt die Überprüfung dann positiv aus, wenn Übereinstimmung dieser beiden Rufnummern gegeben ist. Durch diese Überprüfungs-Maßnahme wird die Sicherheit signifikant erhöht, weil der Benutzer zwei voneinander unabhängige "Adressen" in Form von E-Mail Adresse einerseits und Mobilfunk-Rufnummer andererseits angeben muss, um sich gegenüber der Zentrale "auszuweisen". Selbstverständlich gibt es noch andere Möglichkeiten zur Überprüfung der Mobilfunk-Rufnummer aus der in Schritt 97 an die Zentrale 1 übermittelten SMS. Beispielsweise kann hierbei zusätzlich oder alternativ "nur" eine Plausibilitätsprüfung vorgesehen sein.

Fällt das Prüfungsergebnis positiv aus, wird seitens der Zentrale 1 ein Registrierungscode (REG.CODE) erzeugt, der einmalige Gültigkeit hat. Dieser wird dann in einem weiteren Schritt 101 per SMS an die angegebene Mobilfunk-Rufnummer, also an das Mobilterminal 10 des Benutzers gesendet. Alternativ oder zusätzlich kann der Registrierungscode per E-mail an die angegebene E-Mail-Adresse des Benutzers gesendet werden.

Der Registrierungscode wird dann vom Benutzer gelesen und in einem weiteren Schritt 103 wiederum auf der Website der Zentrale 1 eingeben. Dadurch wird die Sicherheit der Verbindung unterstützt.

Alternativ kann vorgesehen sein, dass die Daten des Benutzerprofils erst im Anschluss an den Empfang des Registrierungscodes eingegeben werden.

In einem weiteren Schritt 104 wählt der Benutzer dann ein Kennwort und eine PIN und gibt diese wiederum auf der Website der Zentrale 1 ein. (Das Kennwort und die PIN sind für die später erfolgende Anforderung des elektronischen Tickets durch den Benutzer erforderlich.)

Mit diesen Daten wird also auf dem integrierten Speicher der Zentrale 1 das neue Benutzerprofil für den Benutzer angelegt. Die Registrierung ist damit abgeschlossen.

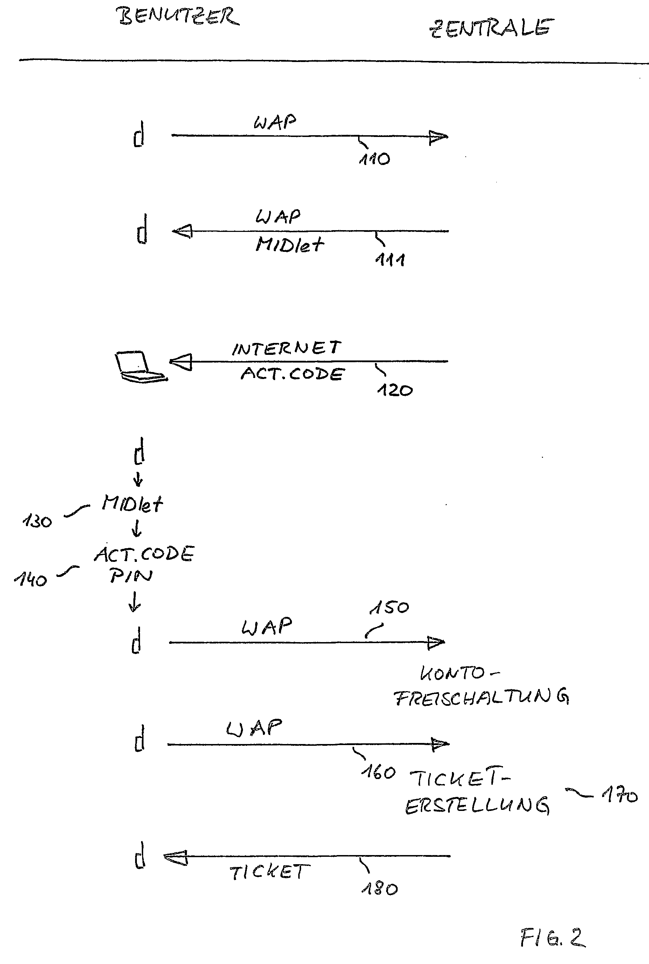

In einem folgenden Abschnitt des Verfahrens, der in Fig. 2 im Sinne einer Fortsetzung aus Fig. 1 dargestellt ist, ist vorgesehen, dass das Mobilterminal 10 des Benutzers mit einem ausführbaren Programm ausgestattet wird, welches die später erfolgende Bereitstellung und Kontrolle des elektronischen Tickets für den Benutzer besonders handhabungsfreundlich, beispielsweise mittels Menü-Steuerung durchführbar werden lässt.

Hierzu ist gemäß dem hier beschriebenen Ausführungsbeispiel vorgesehen, dass der Benutzer zunächst in einem Schritt 110 eine WAP- bzw. Internet-Verbindung zu dem Server 3 der Zentrale 1 aufbaut und über diese Verbindung in einem Schritt 111 ein von der Zentrale 1 zur Verfügung gestelltes MIDlet auf sein Mobilterminal 10 herunterlädt. Bei dem MIDlet kann es sich um ein beispielsweise um eine J2ME-Anwendung für "MIDP-Devices" (MIDP: *mobile information device profile*) handeln. Das MIDlet wird dabei, wie bereits erwähnt, nicht auf der SIM-Karte des Mobilterminals 10, sondern auf einem weiteren Speicher des Mobilterminals 10 gespeichert bzw. abgelegt. Das installierte MIDlet ist also ein auf dem Mobilterminal 10 ausführbares Programm.

Das Programm, im Folgenden kurz mit MIDlet bezeichnet, dient dazu, dem Benutzer in bedienungsfreundlicher Weise zu ermöglichen, über die Zentrale beim Anbieter ein elektronisches Ticket anfordern. Weiterhin dient das MIDlet dazu, dass der Benutzer Daten des elektronischen Tickets, insbesondere eine Ticket-Information, auf Richtigkeit überprüfen kann und bei einer Kontrolle die Daten des elektronischen Tickets angeben bzw. vorzeigen kann.

Die Eigenschaften des MIDlets werden durch die im Folgenden dargestellten Verfahrensschritte deutlich.

Als Sicherheitskomponente ist vorgesehen, dass zur Ausführung des MIDlets die Eingabe der oben genannten, im Zuge der Registrierung vom Benutzer gewählten PIN erforderlich ist. Damit kann also die Gefahr, dass das MIDlet von einer anderen Person als dem Benutzer mißbräuchlich benutzt wird, praktisch ausgeschlossen werden.

Als weitere Sicherheitskomponente ist vorgesehen, dass zur Ausführung des MIDlets die Eingabe eines Aktivierungscodes (ACT.CODE) erforderlich ist, der nur einmal gültig ist und außerdem zeitlich nur beschränkt gültig ist. Dieser Aktivierungscode wird von der Zentrale dem Benutzer in einem weiteren Schritt 120 beispielsweise über Internet, beispielsweise mithilfe eines geschützten Bereichs über die Website der Zentrale 1, mitgeteilt. Um auf den geschützten Bereich der Website zu gelangen, kann vorgesehen sein, dass der Benutzer auf der Website der Zentrale 1 das oben angegebene Kennwort und die PIN eingeben muss.

Zur Anforderung eines elektronischen Tickets ist nunmehr vorgesehen, dass der Benutzer das MIDlet auf dem Mobilterminal 10 in Schritt 130 aufruft. Dabei wird der Benutzer zur Eingabe des zeitlich begrenzt und nur einmal gültigen Aktivierungscodes und der PIN aufgefordert. Wenn diese beiden Eingaben in Schritt 140 korrekt erfolgen, wird durch das MIDlet in Schritt 150 eine WAP-Verbindung zu dem Server 3 der Zentrale 1 aufgebaut, dort eine Verbindung zu der Datenbank 4 hergestellt und dann das Konto des Benutzers durch Freischaltung entsprechend aktiviert. Nach erfolgreicher Freischaltung ermöglicht das MIDlet dem Benutzer in Schritt 160 die Anforderung und Bezahlung eines elektronischen Tickets per Menüsteuerung über das MIDlet.

Die Anforderung des elektronischen Tickets enthält dabei die für die Erstellung des Tickets nötigen Angaben, wie z.B. im Fall einer Fahrkarte die Angabe einer Start-Haltestelle und einer Ziel-Haltestelle, einen Zeitraum, in welchem die Fahrkarte gültig sein soll; Im Fall einer "Eintrittskarte" kann es sich dabei um die Angabe von Ort und Zeit der entsprechenden Veranstaltung handeln usw.

Das elektronische Ticket wird von der Zentrale 1 wie aufgrund der bei der Anforderung angegebenen Daten erstellt und über die WAP-Verbindung oder alternativ per SMS in Schritt 180 an das Mobilterminal 10 des Benutzers übermittelt.

Die entsprechende für den Kauf des elektronischen Tickets erforderliche Überweisung von dem Konto des Benutzers wird ebenfalls von der Zentrale 1 aus durchgeführt.

Das elektronische Ticket wird nun durch das MIDlet für den Benutzer in eine lesbare und auf dem Display des Mobilterminals 10 darstellbare Anzeige umgesetzt. Dabei enthält das elektronische Ticket einen unverschlüsselten Teil, der die Ticket-Information darstellt, also für den Benutzer relevanten Angaben des elektronischen Tickets enthält; im oben angeführten Beispiel also etwa die Angabe der Start- und Ziel-Haltestelle, die zeitliche Gültigkeit usw. Somit ist es dem Benutzer sofort nach Empfang des elektronischen Tickets möglich, diese Angaben zu überprüfen.

Das elektronische Ticket enthält weiterhin einen verschlüsselten Teil. Der Code der entsprechenden Verschlüsselung ist dabei von der Zentrale 1 aus festgelegt und dem Benutzer nicht bekannt. Als Maßnahme zur weiteren Erhöhung der Sicherheit oder Reduzierung eines Mißbrauchsrisikos kann vorgesehen sein, dass der Verschlüsselungscode, mit dem von der Zentrale 1 das elektronischen Ticket teilweise verschlüsselt wird, in gewissen zeitlichen Abständen, beispielsweise täglich geändert wird.

Gemäß einer ersten Variante (Variante I) wird dieser verschlüsselte Teil ebenfalls auf dem Display angezeigt. Gemäß einer zweiten Variante (Variante II) ist es nicht erforderlich, dass der verschlüsselte Teil auf dem Display des Mobilterminals 10 bei diesem Schritt des Verfahrens angezeigt wird.

Bei einer Kontrolle des elektronischen Tickets wird bei Variante I der Benutzer aufgefordert, das elektronische Ticket auf der Anzeige seines Mobilterminals 10 sichtbar zu machen. Diese Aufforderung kann also beispielsweise durch ein Kontrollpersonal erfolgen. Beispielsweise fordert hierzu also ein Zugschaffner einen Fahrgast als den Benutzer des Mobilterminals auf.

Dem Kontrollpersonal ist vorab der Entschlüsselungscode von der Zentrale 1 bekannt gemacht. Auf diese Weise ist es der Kontrollperson also möglich, zu beurteilen, ob das von dem Benutzer auf der Anzeige seines Mobilterminals 10 angezeigte elektronische Ticket tatsächlich von der Zentrale 1 stammt und gültig ist.

Bei Variante II ist vorgesehen, dass das Mobilterminal 10 über eine aufrufbare Kontrollfunktion verfügt, wobei die Kontrollfunktion den (aktuell gültigen) Entschlüsselungscode beinhaltet, mit dem der verschlüsselte Teil des elektronischen Tickets entschlüsselt werden kann.

Die Kontrollfunktion ist dabei vorzugsweise in dem MIDlet integriert und per Menüsteuerung aufrufbar. Zum Aufruf der Kontrollfunktion ist dabei weiterhin insbesondere eine Codenummer, beispielsweise eine "Kontroll-Codenummer", beispielsweise in Form einer weiteren PIN, erforderlich, welche der Kontrollperson zur Durchführung der Kontrolle, aber nicht dem Benutzer bekannt ist.

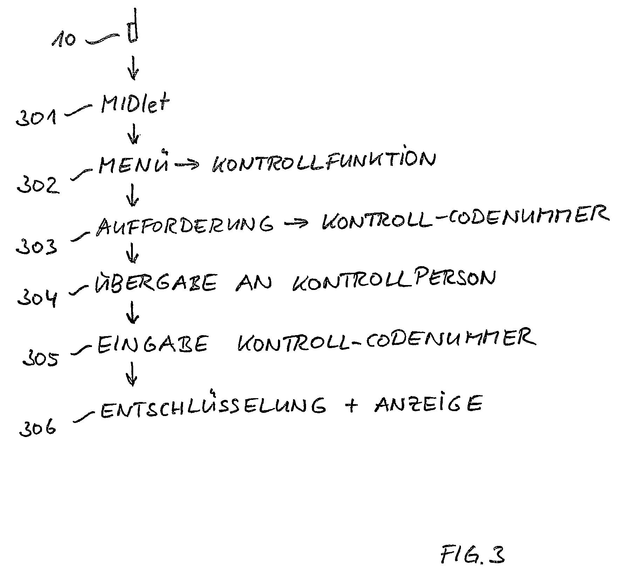

Der entsprechende Vorgang ist in Fig. 3 schematisch dargestellt. Es kann also gemäß dieser Variante II vorgesehen sein, dass der Benutzer das MIDlet in Schritt 301 auf seinem Mobilterminal 10 aufruft. Durch Menü-Steuerung kann dann in Schritt 302 die Kontrollfunktion aufgerufen werden, worauf dann in Schritt 303 eine Aufforderung zur Eingabe der Kontroll-Codenummer erzeugt wird. Daraufhin übergibt der Benutzer in Schritt 304 sein Mobilterminal 10 an die Kontrollperson. Diese gibt in Schritt 305 die Kontroll-Codenummer ein und daraufhin wird in Schritt 306 der verschlüsselte Teil durch die Kontrollfunktion entschlüsselt und auf dem Display dargestellt, so dass die Kontrollperson auf einfache Weise feststellen kann, ob das elektronische Ticket von der Zentrale 1 stammt und gültig ist. Bei dem entschlüsselten Teil kann es sich beispielsweise zumindest teilweise um die Ticket-Information handeln.

Vorzugsweise erfolgt also die Durchführung der Kontrolle unter Nutzung des MIDlets und bei aufgebauter WAP- bzw. Internetverbindung. Dabei kann entweder der Entschlüsselungscode von der Zentrale 1 über diese Verbindung zu dem Mobilterminal 10 übermittelt werden, so dass der dort zur Entschlüsselung vorliegt. Alternativ kann vorgesehen sein, dass der verschlüsselte Teil an die Zentrale 1 übermittelt wird, dort entschlüsselt wird und dann als entschlüsselter Teil wieder zurück an das Mobilterminal 10 übermittelt wird. In jedem Fall ist es also möglich, dass ein aktuell von der Zentrale zur Verfügung gestellter Entschlüsselungscode verwendet wird. Durch die obern bereits erwähnte Maßnahme der Änderung des Entschlüsselungscodes in gewissen zeitlichen Abschnitten kann also das Fälschungsrisiko praktisch ausgeschlossen werden.

Das angegebene Verfahren ermöglicht also sowohl bei Variante I, als auch bei Variante II eine Abwicklung zur Bereitstellung und Kontrolle eines elektronischen Tickets, die völlig "papierlos" funktioniert. Dabei ist das Verfahren für den Benutzer besonders einfach in der Handhabung.

Gemäß einem zweiten Ausführungsbeispiel ist im Unterschied zum ersten Ausführungsbeispiel vorgesehen, dass das Mobilterminal 10' über einen integrierten, also körperlich fest bzw. "nicht reversibel lösbar" mit dem Mobilterminal 10' verbundenen Sender verfügt, der eine dem Mobilterminal 10' eindeutig zugeordnete Geräte-Identifikationsnummer (im Folgenden kurz mit Identifikationsnummer bezeichnet) aussenden kann.

Bei dem Sender kann es sich beispielsweise um einen an sich bekannten Transponder handeln, beispielsweise um einen sogenannten passiven Transponder, also um einen Sender ohne eigene Energiequelle, also insbesondere ohne Batterie oder dergleichen, der aus einer Metallspule und einem Mikrochip besteht. Die Identifikationsnummer ist dabei im Mikrochip gespeichert.

Mit einem geeigneten Lesegerät kann diese Identifikationsnummer empfangen werden. Dazu sendet das Lesegerät eine Strahlung bestimmter Wellenlänge - beispielsweise im Radiowellenbereich (z.B. 13,56 MHz) - aus, die von dem Transponder empfangen wird. Auf Empfang dieser Strahlung reagiert der Transponder dann mit der Aussendung der Identifikationsnummer. Mit dem Lesegerät kann diese Identifikationsnummer empfangen werden. Ein derartiger Transponder ist auch unter dem Begriff *smart label* bekannt und stellt eine sogenannte RFID-Einheit dar (RFID: *radio frequency identification*). Die Transponder-Technik ist soweit an sich bekannt, weshalb hier nicht näher darauf eingegangen wird.

Ein derartiges System mit Lesegerät und Transponder kann beispielsweise eine Reichweite von bis zu zwei Meter aufweisen. Die Identifikationsnummer des Mobilterminals kann hierbei also "ortsnah" mit dem Lesegerät erfasst werden.

Gemäß dem zweiten Ausführungsbeispiel ist es weiterhin im Unterschied zum ersten Ausführungsbeispiel nicht zwingend erforderlich, dass das Mobilterminal 10' über eine Anzeige oder ein Display oder dergleichen verfügt. Eine Anzeige ist jedoch auch in diesem Fall vorteilhaft, und zwar analog zum ersten Ausführungsbeispiel zur einfachen Überprüfung der Ticket-Information durch den Benutzer.

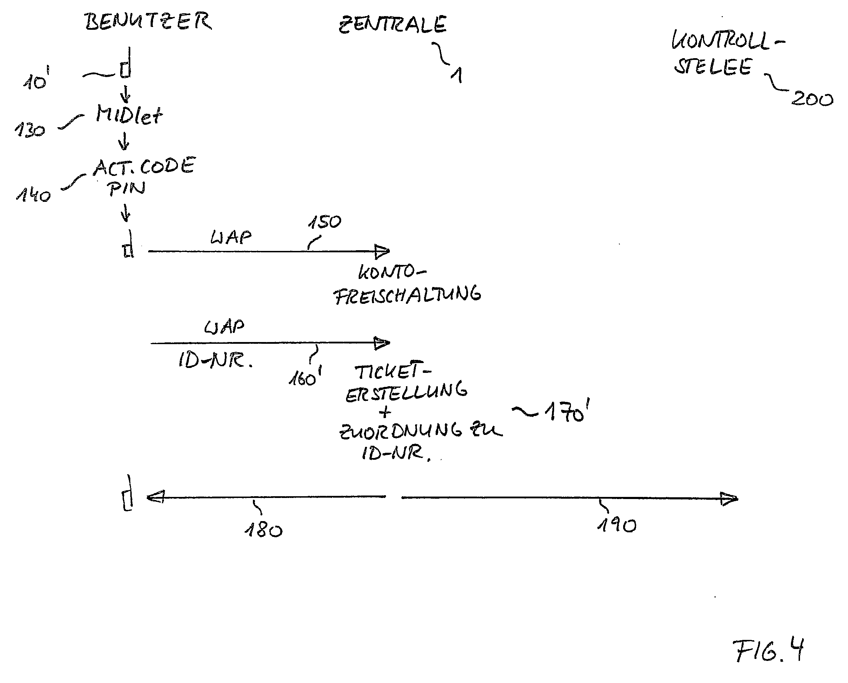

Der Ablauf gemäß dem zweiten Ausführungsbeispiel wird nunmehr anhand von Fig. 4 näher dargestellt. Die Registrierung des Benutzers und die Aktivierung bzw. Freischaltung des Kontos wird dabei wie beim ersten Ausführungsbeispiel durchgeführt. Auch die Anforderung des elektronischen Tickets durch den Benutzer in Schritt 150 erfolgt wie beim ersten Ausführungsbeispiel. Allerdings wird nunmehr zusätzlich, beispielsweise in Schritt 160', die Identifikationsnummer des Mobilterminals 10' an die Zentrale 1 übermittelt. Alternativ kann selbstverständlich die Übermittlung der Identifikationsnummer auch auf andere Weise erfolgen, beispielsweise im Rahmen der Registrierung.

Im Unterschied zum ersten Ausführungsbeispiel wird bei der Erstellung des elektronischen Tickets durch die Zentrale 1 nunmehr eine eindeutige Zuordnung zwischen dem elektronischen Ticket und der Identifikationsnummer des Mobilterminals 10' hergestellt.

Als weitere Sicherheitsmaßnahme kann darüber hinaus vorgesehen sein, dass in die Zuordnung auch noch als weitere Komponente die Rufnummer des Mobilterminals 10' aufgenommen ewird.

Die von der Zentrale 1 festgelegte Zuordnung muss bei der Kontrolle des elektronischen Tickets der Kontrollperson bekannt sein oder gegebenenfalls an der Kontrollvorrichtung vorliegen. Dazu wird das elektronische Ticket zusammen mit der zugeordneten Identifikationsnummer an eine Kontrollstelle 200 übersandt, beispielsweise unter Nutzung des Internets oder eines Intranets der Zentrale 1. Die Kontrollstelle 200 ist mit einem entsprechenden Lesegerät ausgestattet.

Die Kontrolle findet an der Kontrollstelle statt. Dabei wird der Benutzer gemäß diesem zweiten Ausführungsbeispiel aufgefordert, sein Mobilterminal 10' an dem entsprechenden Lesegerät vorbeizuführen, bzw. das Lesegerät am Mobilterminal 10'vorbeiführen zu lassen, so dass also mit dem Lesegerät die Identifikationsnummer des Mobilterminals 10' erfasst wird. Nun wird durch die Kontrollperson (oder automatisch durch die Kontrollvorrichtung) anhand der vorliegenden Zuordnungs-Information überprüft, ob für die erfasste Identifikationsnummer ein zugeordnetes gültiges elektronisches Ticket vorliegt.

Gemäß dem zweiten Ausführungsbeispiel muss sich also der Benutzer nicht mehr durch Vorzeigen des Displays seines Mobilterminals gegenüber der Kontrollperson ausweisen. Die Berechtigung kann automatisch durch das entsprechende Lesegerät erfolgen. Die Erfassung der Identifikationsnummer kann weiterhin berührungslos, insbesondere "drahtlos" erfolgen. Der Benutzer nähert sich also zur Kontrolle mit seinem Mobilterminal 10' einer "Schranke" an der Kontrollstelle, die drahtlos für den entsprechenden Ort und die entsprechende Zeit die Berechtigung überprüft und bei festgestellter Berechtigung beispielsweise den entsprechenden Zugang, also beispielsweise eine "körperliche" Schranke automatisch öffnet.

Die Vorteile der Erfindung können wie folgt zusammengefasst werden:
- Das Abwicklungssystem ermöglicht die "papierlose" Bereitstellung und Kontrolle eines elektronischen Tickets.
- Im Rahmen der Kontrolle ist kein persönliches Ausweisen des Benutzers erforderlich.
- Die Handhabung erfolgt für den Benutzer besonders bedienungsfreundlich durch Menü-Steuerung.
- Zur Installation des Bedienungsprogramms kann ein MIDlet über Internet von der Zentrale auf das Mobilterminals geladen werden.
- Die Kontrolle erfolgt durch eine Kontrollperson oder durch eine Kontrollvorrichtung.
- Bei der Zentrale wird vorab ein Benutzerprofil angelegt, das bis auf weiteres genutzt werden kann.
- Gemäß dem zweiten Ausführungsbeispiel ist kein Vorzeigen des Displays des Mobilterminals erforderlich.

### Bezugszeichenliste

- 1: Zentrale
- 2: Internet
- 3: Server
- 4: Datenbank
- 5: SMS-Center
- 10: Mobilterminal
- 12: PC
- 20: Richtungsangabe des zeitlichen Ablaufs
- 95: Eingabe der Daten für das Benutzerprofil auf der Website der Zentrale
- 96: Aufforderung, eine SMS zu senden
- 97: SMS
- 101: Übermittlung des Registrierungscodes
- 103: Eingabe des Registrierungscodes auf der Website der Zentrale
- 104: Eingabe von Kennwort und PIN
- 110: Aufbau WAP-Verbindung
- 111: Download des MIDlet auf das Mobilterminal
- 120: Übermittlung des Aktivierungscodes
- 130: Aufruf MIDlet
- 140: Eingabe des Aktivierungscodes und der PIN
- 150: WAP-Verbindung im Rahmen des MIDlet
- 160: Anforderung und Bezahlung des elektronischen Tickets
- 180: Übermittlung des elektronischen Tickets an das Mobilterminal
- 200: Kontrollstelle
- 301: Aufruf des MIDlet
- 302: Aufruf Kontrollfunktion
- 303: Aufforderung zur Eingabe der Kontroll-Codenummer
- 304: Übergabe des Mobilterminals an die Kontrollperson
- 305: Eingabe der Kontroll-Codenummer durch die Kontrollperson
- 306: Entschlüsselung des verschlüsselten Teils und Darstellung

## Patentansprüche

1. Abwicklungssystem zur Bereitstellung und Kontrolle eines elektronischen Tickets für einen Benutzer, aufweisend eine Zentrale (1) und ein Mobilterminal (10) des Benutzers, wobei die Zentrale (1) Mittel zur Erzeugung des elektronischen Tickets und zur Übersendung des elektronischen Tickets an das Mobilterminal (10) aufweist, wobei das elektronische Ticket einen verschlüsselten Teil aufweist, und wobei das Mobilterminal (10) Mittel zum Empfang und zur Darstellung des verschlüsselten Teils aufweist, **dadurch gekennzeichnet, dass**
- ein ausführbares Programm auf dem Mobilterminal (10) installiert ist,
- welches zur Darstellung einer Ticketinformation und zum Aufruf einer Kontrollfunktion programmiert ist,
- wobei der Aufruf des Programms die Eingabe einer von dem Benutzer vorab festgelegten Programm-Codenummer
- und die Eingabe eines nur einmal und zeitlich beschränkt gültigen Aktivierungscodes erfordert, der vorab von der Zentrale (1) festgelegt und an den Benutzer übermittelt wird,
- wobei die Zentrale (1) und das Mobilterminal (10) über ein Netzwerk verbindbar sind und
- entweder ein aktueller Entschlüsselungscode im Rahmen einer Kontrolle an das Mobilterminal (10) gesendet oder
- der verschlüsselte Teil des elektronischen Tickets an die Zentrale übermittelt, dort entschlüsselt und als entschlüsselter Teil wieder an das Mobilterminal (10) zurück übermittelt wird.

2. Abwicklungssystem nach Anspruch 1,**dadurch gekennzeichnet, dass** das Mobilterminal (10) Mittel zur Anzeige einer Ticket-Information des elektronischen Tickets aufweist.

3. Abwicklungssystem nach einem der vorhergehenden Ansprüche, **dadurch gekennzeichnet, dass** das Mobilterminal (10) einen Speicher aufweist, in dem das Programm zum Aufruf der Kontrollfunktion abspeicherbar ist.

4. Abwicklungssystem nach Anspruch 1, **dadurch gekennzeichnet, dass** der Speicher körperlich fest mit dem Mobilterminal (10) verbunden oder in dem Mobilterminal (10) integriert ist.

5. Abwicklungssystem nach Anspruch 3 oder 4, **dadurch gekennzeichnet, dass** das Programm auf einer objektorientierten, plattformneutralen Programmiersprache basiert.

6. Abwicklungssystem nach einem der Ansprüche 3 bis 5, **dadurch gekennzeichnet, dass** das Programm auf einer Programmiersprache der Gattung JAVA oder einer Programmiersprache mit vergleichbaren Eigenschaften basiert.

7. Abwicklungssystem nach einem der Ansprüche 3 bis 6, **dadurch gekennzeichnet, dass** das Programm ein MIDlet oder ein Programm mit vergleichbaren Eigenschaften ist.

8. Abwicklungssystem nach Anspruch 1, **dadurch gekennzeichnet, dass** das Netzwerk das Internet (2) oder ein Intranet ist.

9. Abwicklungssystem nach einem der vorhergehenden Ansprüche, **dadurch gekennzeichnet, dass** das Mobilterminal (10) über eine Funktionalität verfügt, mit der Netzwerk-Inhalte drahtlos bereitgestellt werden können.

10. Abwicklungssystem nach einem der vorhergehenden Ansprüche, **dadurch gekennzeichnet, dass** das Mobilterminal (10) über eine WAP-Funktionalität verfügt.

11. Abwicklungssystem nach einem der Ansprüche 1 bis 13, **dadurch gekennzeichnet, dass** der Entschlüsselungscode von der Zentrale (1) aus änderbar ist.

12. Abwicklungssystem nach einem der vorhergehenden Ansprüche, **dadurch gekennzeichnet, dass** die Zentrale (1) Mittel zum Zugriff auf ein Konto des Benutzers aufweist.

13. Abwicklungssystem nach Anspruch 12, **dadurch gekennzeichnet, dass** die Zentrale (1) mit einem Netzwerk verbunden ist, wobei der Zugriff auf das Konto über das Netzwerk ausführbar ist.

## Claims

1. A processing system for providing and inspecting an electronic ticket for a user, comprising a control centre (1) and a mobile terminal (10) of the user, wherein the control centre (1) includes means for generating the electronic ticket and for sending the electronic ticket to the mobile terminal (10), the electronic ticket includes an encrypted part, and the mobile terminal (10) includes means for receiving and for representing the encrypted part, **characterised in that**
- an executable program is installed on the mobile terminal (10),
- which is programmed for displaying an item of information and for calling up an inspecting function,
- wherein calling up of the program requires the input of a predetermined program code number determined by the user
- and the input of an activation code which is only valid for a single use and for a limited period of time, which code has been predetermined by the control centre (1) and is transmitted to the user,
- wherein the control centre (1) and the mobile terminal (10) are connectable via a network, and
- either a current decryption code is sent to the mobile terminal (10) in connection with an inspection, or
- the encrypted part of the electronic ticket is conveyed to the control centre, is decrypted there and is conveyed back to the mobile terminal (10) as decrypted part.

2. The processing system according to claim 1, **characterised in that** the mobile terminal (10) comprises means for displaying an item of information of the electronic ticket.

3. The processing system according to one of the preceding claims, **characterised in that** the mobile terminal (10) comprises a memory in which the program can be stored for calling up the inspecting function.

4. The processing system according to claim 1, **characterised in that** the memory is physically secured to the mobile terminal (10) or integrated in the mobile terminal (10).

5. The processing system according to claim 3 or 4, **characterised in that** the program is based on an object-oriented, platform-neutral programming language.

6. The processing system according to one of claims 3 to 5, **characterised in that** the program is based on a JAVA-type programming language or a programming language having comparable properties.

7. The processing system according to one of claims 3 to 6, **characterised in that** the program is a MIDlet or a program having comparable properties.

8. The processing system according to claim 1, **characterised in that** the network is the Internet (2) or an intranet.

9. The processing system according to one of the preceding claims, **characterised in that** the mobile terminal (10) has a functionality allowing network contents to be provided wirelessly.

10. The processing system according to one of the preceding claims, **characterised in that** the mobile terminal (10) is configured to have a wireless application protocol (WAP) functionality.

11. Processing system according to one of claims 1 to 13, **characterised in that** the decryption code can be changed from the control centre (1).

12. The processing system according to one of the preceding claims, **characterised in that** the control centre (1) comprises means for accessing an account of the user.

13. The processing system according to claim 12, **characterised in that** the control centre (1) is connected to a network, an account being accessible via the network.

## Revendications

1. Système de traitement permettant de mettre à disposition et de contrôler un billet électronique destiné à un utilisateur, comprenant une centrale (1) et un terminal mobile (10) de l'utilisateur, la centrale (1) présentant des moyens permettant de produire le billet électronique et de transmettre le billet électronique au terminal mobile (10), le billet électronique comprenant une partie codée, et le terminal mobile (10) présentant des moyens destinés à recevoir et à afficher la partie codée, **caractérisé en ce que**
- un programme exécutable est installé sur le terminal mobile (10),
- lequel est programmé pour afficher une information de billet et pour appeler une fonction de contrôle,
- l'appel du programme nécessitant l'entrée d'un numéro de code de programme préalablement défini par l'utilisateur
- et l'entrée d'un code d'activation valide une seule fois et de façon limitée dans le temps, qui est préalablement défini par la centrale (1) et transmis à l'utilisateur,
- la centrale (1) et le terminal mobile (10) pouvant être reliés par un réseau, et
- soit un code de décodage actuel étant envoyé au terminal mobile (10) dans le cadre d'un contrôle soit
- la partie codée du billet électronique étant transmise à la centrale, décodée à cet endroit et retransmise au terminal mobile (10) en tant que partie décodée.

2. Système de traitement selon la revendication 1, **caractérisé en ce que** le terminal mobile (10) comprend des moyens destinés à afficher une information de billet du billet électronique.

3. Système de traitement selon l'une quelconque des revendications précédentes, **caractérisé en ce que** le terminal mobile (10) comprend une mémoire dans laquelle le programme permettant d'appeler la fonction de contrôle est mis en mémoire.

4. Système de traitement selon la revendication 1, **caractérisé en ce que** la mémoire est reliée physiquement fixement au terminal mobile (10) ou intégrée dans le terminal mobile (10).

5. Système de traitement selon la revendication 3 ou 4, **caractérisé en ce que** le programme est basé sur un langage de programmation indépendant de la plateforme utilisée et orienté objet.

6. Système de traitement selon l'une quelconque des revendications 3 à 5, **caractérisé en ce que** le programme est basé sur un langage de programmation du type JAVA ou un langage de programmation présentant des propriétés comparables.

7. Système de traitement selon l'une quelconque des revendications 3 à 6, **caractérisé en ce que** le programme est un MIDlet ou un programme présentant des propriétés comparables.

8. Système de traitement selon la revendication 1, **caractérisé en ce que** le réseau est l'Internet (2) ou un Intranet.

9. Système de traitement selon l'une quelconque des revendications précédentes, **caractérisé en ce que** le terminal mobile (10) dispose d'une fonctionnalité permettant de mettre à disposition sans fil les contenus de réseau.

10. Système de traitement selon l'une quelconque des revendications précédentes, **caractérisé en ce que** le terminal mobile (10) dispose d'une fonctionnalité WAP.

11. Système de traitement selon l'une quelconque des revendications 1 à 13, **caractérisé en ce que** le code de décodage peut être modifié à partir de la centrale (1).

12. Système de traitement selon l'une quelconque des revendications précédentes, **caractérisé en ce que** la centrale (1) comprend des moyens permettant d'avoir accès à un compte de l'utilisateur.

13. Système de traitement selon la revendication 12, **caractérisé en ce que** la centrale (1) est reliée à un réseau, l'accès au compte pouvant être réalisé par l'intermédiaire du réseau.
